# EUROPEAN PATENT SPECIFICATION

(11) **EP 1 698 538 B1**
(45) Date of publication and mention of the grant of the patent: **01.10.2008**
(21) Application number: 06251040.9
(22) Date of filing: 27.02.2006
(51) Int. Cl.: B62D 5/00

(54) **Haptic feedback device**
Fühlbare Rückführung
Dispositif à retour haptique

(30) Priority: 03.03.2005 GB 0504484
(43) Date of publication of application: 06.09.2006
(73) Proprietor: ULTRA ELECTRONICS LIMITED, Greenford, Middlesex UB6 8UA (GB)
(72) Inventor: Biggadike, Christopher Stephen Andrew, Cheltenham, Gloucestershire, GL53 7BD (GB)
(74) Representative: Ribeiro, James Michael

(56) References cited:
- EP-A- 1 142 746
- EP-A- 1 211 159
- EP-A- 1 219 524
- EP-A- 1 316 491

## Description

The present invention relates to a haptic feedback device.

A haptic feedback device is described in US-A-6655490. The device is provided as part of a vehicle steer-by-wire system, and generates steering feedback to the driver of the vehicle. In one variation, steering feedback is provided by an electric motor. In another variation, feedback is provided by a magneto-rheological ("MR") device.

The use of a switched electric motor introduces the problem of motor inertia. That is, the inertia of the motor makes it difficult to switch quickly, and difficult to make small incremental movements.

MR devices operate by varying the intensity of a magnetic field across a MR fluid and hence do not suffer from the problem of motor inertia. However, MR devices have traditionally only been used in damping applications - that is, providing a resistive damping force.

EP-A-1219524 describes an electric motor assisted power steering system which employs a pair of counter-rotating MR clutches to couple the motor to the vehicle's wheels.

EP-A-1211159 describes a simulated steering feel system which employs an MR device to provide a resistive force, and a DC motor to further improve the functionality of the system.

A first aspect of the present invention provides a haptic feedback device including a motor; a user-contact element which contacts a user, when in use, to provide haptic feedback; and a brake for selectively applying a braking force to the user-contact element, characterised in that the device further comprises a magneto-rheological clutch for selectively coupling the motor with the user-contact element; and a force feedback control electronics system which is configured to drive the brake and the clutch, when in use, so as to provide haptic feedback to the user. The brake may be a conventional contact brake, but more preferably is a magneto-rheological brake.

The clutch enables the device to actively drive the output member, in contrast to the MR device in US-A-6655490.

Preferably the device comprises a pair of magneto-rheological clutches for selectively coupling the motor with the user-contact element, wherein the pair of clutches are configured to drive the output element in opposite directions, and the force feedback control electronics system is configured to drive the clutches, when in use, so as to provide haptic feedback to the user.

The use of a pair of oppositely configured clutches enables the device to vary the direction and quantity of haptic feedback quickly, and also enables a variety of different movements to be generated, such as flutter, rumble or other vibrational movements.

The output element may be a user-contact element which contacts a user to provide the haptic feedback. Typically, although not exclusively, the user-contact element will be a user input device such as a steering wheel, joystick, computer mouse, tiller, or yoke. Alternatively, the device may be a module which can be retro-fitted to an existing user-contact element. In this case, the output element is a linking element which can be coupled during retro-fitting to the user-contact element.

The device may be used in any suitable application in which a haptic sensation is to be provided to a user. For example the device may be used in a steer-by-wire feedback system for a wheeled or tracked vehicle, or in a driving simulator or other computer game application.

Various embodiments of the present invention will now be described with reference to the accompanying drawings, in which:
Figure 1 is a cross-sectional view of a haptic feedback device according to the present invention;
Figure 2 is a schematic diagram of a wheeled vehicle steer-by-wire system including the device of Figure 1;
Figure 3 is a schematic diagram of a tracked vehicle steer-by-wire system incorporating the device of Figure 1;
Figure 4 is a perspective view of a joystick system incorporating a pair of haptic feedback devices according to the present invention; and
Figure 5 is a view of a joystick system with an alternative drive-link arrangement.

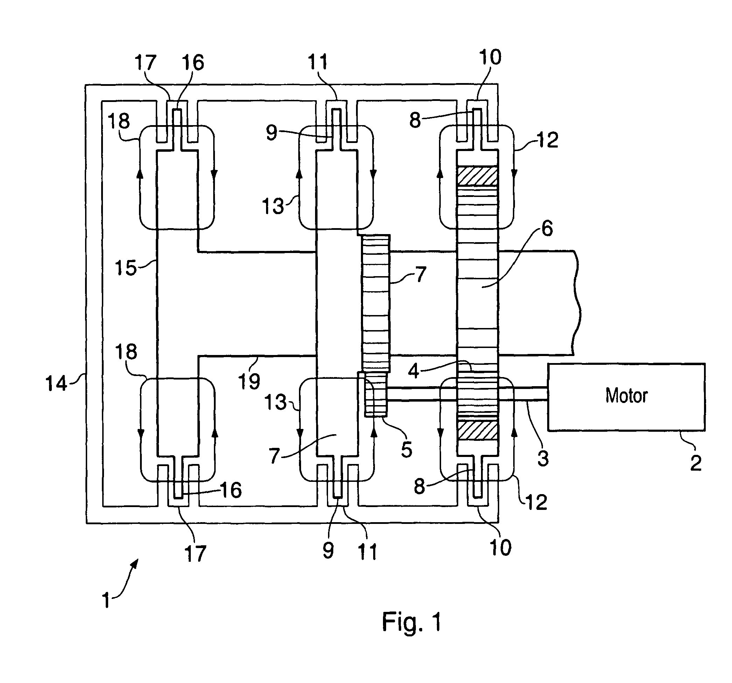

Referring to Figure 1, a haptic feedback device 1 includes a motor 2 with a drive shaft 3 which rotates at a constant speed and direction. The drive shaft 3 carries first and second spur gears 4, 5. The first gear 4 drives the teeth on the inside of a ring gear 6. The second gear 5 drives the teeth on the outside of a spur gear 7. Thus, the motor 2 constantly drives the ring gear 6 in one direction, and the spur gear 7 in the opposite direction. The gears 6, 7 are configured to run at the same rotational speed.

An output element 14 has three pairs of annular flanges which each define respective slots 10, 11, 17. The gears 6, 7 have annular flanges 8, 9 which are each received in a respective one of the slots 10, 11. The slots 10, 11, 17 contain a magneto-rheological fluid such as Lord MRF-132AD. The fluid just fills the slots 10, 11, 17 which are about 1.7mm wide and so very little fluid is required. Seals (not shown) are provided. The seals can be either dynamic (rotary) rubber seals suitable for use with synthetic oil, or a permanent magnet can create a seal by solidifying the fluid at the junction. A rubber seal is the more normal solution.

Suitable means (not shown) is provided to generate a controlled magnetic field 12, 13 passing through the flanges 8, 9 and slots 10, 11. Varying the strength of the magnetic field varies the viscosity of the magneto-rheological fluid. Thus, by varying the strength of the magnetic fields 12, 13, the degree of coupling (that is, the driving force) between the annular flanges 8, 9 and the output element 14 can be controlled.

A brake disc 15 has an annular flange 16 which is received in the slot 17. The brake disc is carried on a shaft 19 which is held stationary with respect to the output element 14 and drive shaft 13. Suitable means (not shown) is provided to generate a controlled magnetic field 18 passing through the flange 16 and slot 17. Thus by varying the strength of the field 18, the degree of coupling (that is, the braking force) between the flange 16 and the output element 14 can be controlled. Braking forces can be used to provide stiffness of movement, end stops, and locking in place.

By having three (effectively infinitely variable) elements in a steady state system, it is anticipated that the response speed of the device will be far higher than in an equivalent purely motor driven arrangement. MR fluid reacts almost instantly to changes in magnetic field. As the clutch discs are already moving and do not change speed, the acceleration derived by the clutch is proportional to the magnetic field induced.

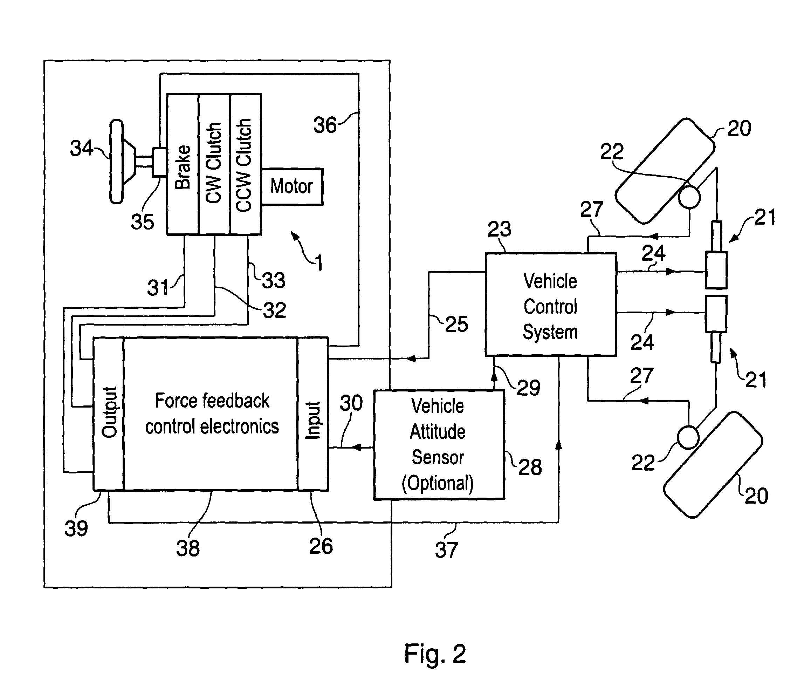

A steering system for a wheeled vehicle is shown in Figure 2. The system incorporates the device 1 of Figure 1. A pair of wheels 20 are steered by wheel actuators 21. The angle of the wheels is detected by wheel angle sensors 22. Vehicle control system 23 generates wheel actuator drive data which is output on lines 24 to the wheel actuators 21, and on line 25 to a force feedback control electronics input section 26. The vehicle control system 23 also receives wheel angle data from wheel angle sensors 22 on lines 27. This wheel angle data is also transmitted to the input section 26 on line 25. Optionally, a vehicle attitude sensor 28 may be provided. The sensor provides data which is output to the vehicle control system 23 on output line 29, and to the input section 26 on output line 30.

The force feedback control electronics system 38 has an output section 39 which drives the pair of clutches and the brake via respective control lines 31, 32, 33. The output element 14 (not shown) is coupled to a steering wheel 34. A rotary hall effect sensor (or other rotary position transducer) 35 is also provided to generate rotary position data which is output to the force feedback control electronics input section 26 on output line 36. The force feedback control electronics system 38 also generates vehicle turn request data which is output to the vehicle control system 23 on output line 37.

By using MR fluid as an interface, the feel (haptics) of the feedback system is closer to that experienced during normal driving in comparison to that provided by direct drive from an electric motor.

The principals of operation of the system are as follows:
- At all times, the system tries to correlate the control element (steering wheel etc.) angle with the related vehicle state. In a wheeled vehicle, the angle of the wheels relative to the vehicle axis could be used. In a tracked vehicle, a 'virtual change angle' can be generated from data received from attitude sensors, slip sensors etc.
- When the system is initiated, it moves the control element to a correlated start/datum position from which the user or the system can force a deviation to request a change in vehicle state. An unrequested change in vehicle state would prompt a 'force feedback' which is the manifestation of the vehicle state and the control element state being brought into line by the feedback system.
- The feedback system needs to be able to apply enough force and braking to resist 'over-demand' - This is when the user turns the handle at a rate which cannot be matched by the vehicle. This manifests itself as a resistance to turning too quickly.
- Other sensed changes in the vehicle state can be conveyed to the user by pre-determined haptic responses in the control element. Thus oscillations, sudden free motion (like steering on ice) bumps and other sensations can be fed to the control handle by the system to indicate the presence of certain sensed vehicle states (slipping, skidding etc.) These pre-determined responses are created artificially from a library of output sequences and are not simply a reflection of raw inputs into the system.
- It may be the case that filtering of vehicle inputs is desirable and that much of the 'noise' of vehicle system responses are removed from the haptic responses fed to the user.
- The essence of the situation is that the user is steering the haptic control part of the system, the vehicle control element is controlling the vehicle and using feedback from the vehicle to ensure that the haptic control that the user sees makes instinctive sense. The actual correlation between the actions the vehicle is being asked to make and the actions the user is requesting via the control element need not be very close. A good example of this is the Eurofighter aircraft which is directly controlled by the flight computer and 'flown' by the pilot.
- Light forces to replicate side drift can be achieved by activating the appropriate clutch alone but it is envisaged that a more favourable (stable) result will be achieved by applying a degree of stiffness at the same time. The system overall will be more stable if a brake is applied in tandem with one or the other of the clutches.

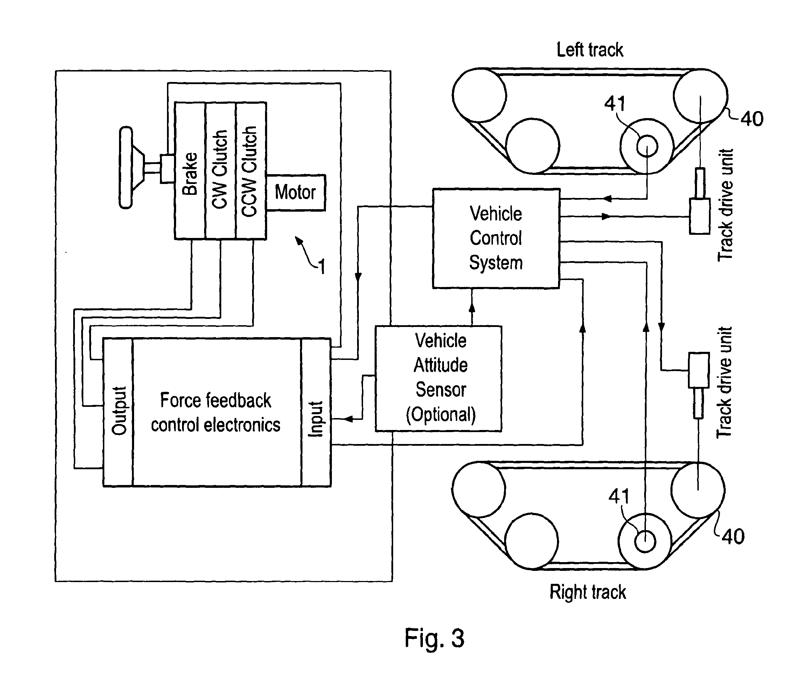

Figure 3 shows a tracked vehicle incorporating the device 1 of Figure 1. The wheels 20 of Figure 2 are replaced by tracks 40, and the wheel angle sensors 22 are replaced by rotary sensors 41. Otherwise, the architecture and principle of operation are similar to Figure 2.

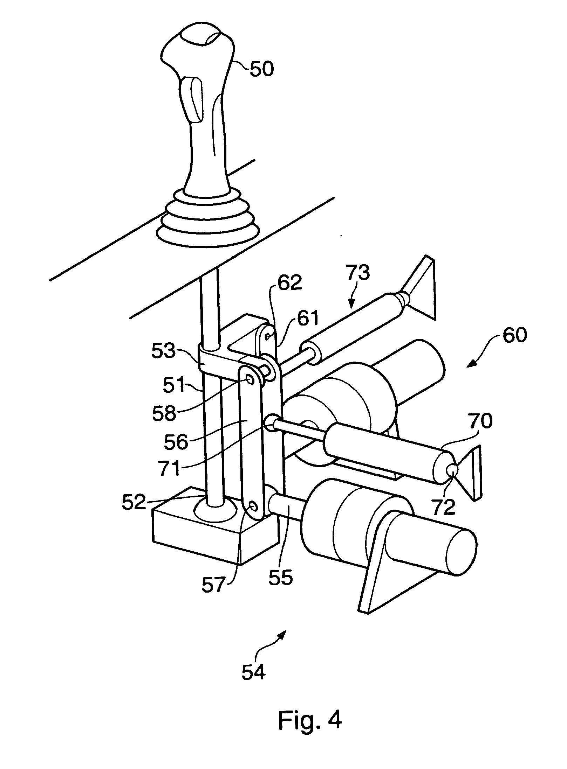

Figure 4 shows a joystick system incorporating a pair of haptic feedback devices according to the invention. A joystick 50 and shaft 51 are mounted on a ball joint/gimbal 52. An L-shaped bracket 53 is fixed to the shaft 51. A first contra-rotating MR clutch unit 54 has a rotary output shaft 55 mounted to a rotor link 56 via a pin joint 57. The rotor link 56 is mounted at its other end to the L-shaped bracket 53 by a second pin joint 58. The unit 54 is identical in construction to the unit shown in Figure 1, except that it does not incorporate a brake.

A second contra-rotating MR clutch unit 60 (identical in construction to the unit 54) is arranged at right angles to the unit 60 and is coupled to the L-shaped bracket 53 by a respective rotor link 61 and pin joint 62.

An MR fluid based linear damper/brake 70 is mounted to the rotor link 56 by a ball joint 71. The brake 70 is also mounted to a chassis (not shown) by a ball joint 72 at its other end. A similar brake 73 is provided at right angles to the brake 70, coupled to the other rotor link 61. The linear damper/brake units shown are illustrating a potential improvement to the rotary brakes shown earlier. Either could be used in this application.

Thus it can be seen that the haptic feedback system of Figure 4 provides movements in two mutually orthogonal directions so as to provide haptic feedback to a user holding the joystick 50.

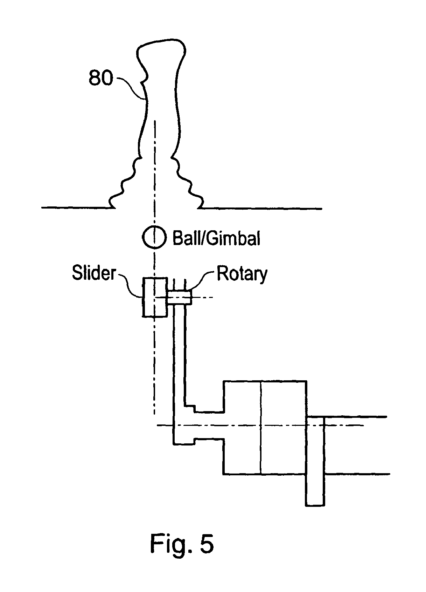

When the available geometry precludes the arrangement shown in Fig. 4, an alternative joystick 80 can be used as shown in Fig. 5. In this example the two opposing haptic feedback units are no longer acting on the pivot point of the grip but are actuating a slider on a rod which hangs below the grip. The small angle of motion required by the grip makes the less linear geometric arrangement still workable. The arm linkage shown in Fig 5. is very simplified and does not show the number of pivots required to make this arrangement work. The principal would be very similar to that shown in Fig 4.

## Claims

1. A haptic feedback device including a motor (2); a user-contact element (34) which contacts a user, when in use, to provide haptic feedback; and a brake (15) for selectively applying a braking force to the user-contact element, **characterised in that** the device further comprises a magneto-rheological clutch (8,9) for selectively coupling the motor with the user-contact element; and a force feedback control electronics system (38) which is configured to drive the brake and the clutch, when in use, so as to provide haptic feedback to the user.

2. A device according to claim 1 wherein the brake (15) is a magneto-rheological brake.

3. A device according to claim 1 or 2 wherein the clutch comprises a pair of magneto-rheological clutches (8,9), wherein the pair of clutches are configured to drive the user-contact element in opposite directions, and wherein the force feedback control electronics system (38) is configured to drive the clutches, when in use, so as to provide haptic feedback to the user.

4. A device according to any preceding claim wherein the user-contact element is a user input device.

5. A device according to claim 4 wherein the user input device is a steering wheel, joystick, computer mouse, tiller, or yoke.

6. A device according to claim 3 wherein the force feedback control electronics system (38) is configured to drive the pair of clutches so as to provide vibrational movements to the user-contact element.

7. A steering system comprising a steering element (34), and a device according to any preceding claim for providing haptic feedback to the steering element.

8. A steering system according to claim 7 wherein the steering element generates electronic steering data.

9. A steering system according to claim 7 or 8, wherein the device is used in a steer-by-wire feedback system for a wheeled or tracked vehicle, or in a driving simulator or other computer game application.

10. The use of a device according to any of claims 1 to 6 in a steer-by-wire feedback system for a wheeled or tracked vehicle, or in a driving simulator or other computer game application.

11. A joystick (50,80) comprising a device according to any of claims 1 to 6.

## Patentansprüche

1. Haptische Rückkopplungsvorrichtung mit einem Motor (2), einem Benutzerkontaktelement (34), das, wenn es im Betrieb ist, in Kontakt mit dem Benutzer tritt, um eine haptische Rückkopplung zu liefern, und mit einer Bremse (15) zum selektiven Anwendet einer Bremskraft auf das Benutzerkontaktelement, **dadurch gekennzeichnet, dass** die Vorrichtung weiter eine magnetorheologische Kupplung (8, 9) zum selektiven Verbinden des Motors mit dem Benutzerkontaktelement und ein Kraftrückkopplungs-Steuerelektroniksystem (38) aufweist, das dazu ausgestaltet ist, um die Bremse und die Kupplung im Betrieb so zu betreiben, dass sie dem Benutzer eine haptische Rückkupplung liefern.

2. Vorrichtung nach Anspruch 1, wobei die Bremse (15) eine magnetorheologische Bremse ist.

3. Vorrichtung nach Anspruch 1 oder 2, wobei die Kupplung ein Paar von magnetorheologischen Kupplungen (8, 9) aufweiset, wobei das Paar der Kupplungen dazu ausgestaltet ist, das Benutzerkontaktelement in entgegengesetzte Richtungen anzutreiben, und wobei das Kraftrückkopplungs-Steuerelektroniksystem (38) dazu ausgestaltet ist, die Kupplungen im Betrieb so zu betreiben, um dem Benutzer eine haptische Rückkopplung zu liefern.

4. Vorrichtung nach einem der vorhergehenden Ansprüche, wobei das Benutzerkontaktelement eine Benutzereingabeeinrichtung ist.

5. Vorrichtung nach Anspruch 4, wobei die Benutzereingabeeinrichtung ein Steuerrad, ein Steuerhebel, eine Computer-Maus, eine Ruderstange oder ein Steuerknüppel ist.

6. Vorrichtung nach Anspruch 3, wobei das Kraftrückkopplungs-Steuerelektroniksystem (38) so ausgestaltet ist, um das Paar der Kupplungen so zu betreiben, dass sie das Benutzerkontaktelement in Vibrationsbewegungen versetzen.

7. Steuersystem mit einem Steuerelement (34) und einer Vorrichtung nach einem der vorhergehenden Ansprüche zum Bereitstellen einer haptischen Rückkopplung an das Steuerelement.

8. Steuersystem nach Anspruch 7, wobei das Steuerelement elektronische Steuerdaten erzeugt.

9. Steuersystem nach Anspruch 7 oder 8, wobei die Vorrichtung in einem Steer-By-Wire-Rückkopplungssystem für ein Rad- oder Kettenfahrzeug oder in einem Fahrsimulator oder in einer anderen Computer-Spielanwendung verwendet wird.

10. Verwendung einer Vorrichtung nach einem der Ansprüche 1 bis 6 in einem Steer-By-Wire-Rückkopplungssystem für ein Rad- oder Kettenfahrzeug oder in einem Fahrsimulator oder in einer anderen Computer-Spielanwendung.

11. Steuerhebel (50, 80), mit einer Vorrichtung nach einem der Ansprüche 1 bis 6.

## Revendications

1. Dispositif à retour haptique comprenant un moteur (2) ; un élément de contact d'utilisateur (34) qui entre en contact avec un utilisateur, pendant l'utilisation, pour fournir un retour haptique ; et un frein (15) destiné à appliquer de manière sélective une force de freinage à l'élément de contact d'utilisateur, **caractérisé en ce que** le dispositif comprend également un embrayage magnéto-rhéologique (8, 9) destiné à coupler de manière sélective le moteur avec l'élément de contact d'utilisateur ; et un système électronique de commande à retour de force (38) qui est configuré pour entraîner le frein et l'embrayage, pendant l'utilisation, de manière à fournir un retour haptique à l'utilisateur.

2. Dispositif selon la revendication 1 dans lequel le frein (15) est un frein magnéto-rhéologique.

3. Dispositif selon la revendication 1 ou 2 dans lequel l'embrayage comprend une paire d'embrayages magnéto-rhéologiques (8, 9), la paire d'embrayages étant configurée pour entraîner l'élément de contact d'utilisateur dans des directions opposées et le système électronique de commande à retour de force (38) étant configure pour entraîner les embrayages, pendant l'utilisation, de manière à fournir un retour haptique à l'utilisateur.

4. Dispositif selon l'une quelconque des revendications précédentes dans lequel l'élément de contact d'utilisateur est un dispositif d'entrée d'utilisateur.

5. Dispositif selon la revendication 4 dans lequel le dispositif d'entrée d'utilisateur est un volant, un manche à balai, une souris d'ordinateur, une barre ou une fourche.

6. Dispositif selon la revendication 3 dans lequel le système électronique de commande à retour de force (38) est configuré pour entraîner la paire d'embrayages de manière à fournir des mouvements vibratoires à l'élément de contact d'utilisateur.

7. Système de direction comprenant un élément de direction (34), et un dispositif selon l'une quelconque des revendications précédentes destiné à fournir un retour haptique à l'élément de direction.

8. Système de direction selon la revendication 7 dans lequel l'élément de direction génère des données électroniques de direction.

9. Système de direction selon la revendication 7 ou 8, dans lequel le dispositif est utilisé dans un système à retour à direction à commande électronique pour un véhicule sur roue ou à chenilles, ou dans un simulateur de conduite ou une autre application de jeu sur ordinateur.

10. Utilisation d'un dispositif selon l'une quelconque des revendications 1 à 6 dans un système à retour à direction à commande électronique pour un véhicule sur roue ou à chenilles, ou dans un simulateur de conduite ou une autre application de jeu sur ordinateur.

11. Manche à balai (50,80) comprenant un dispositif selon l'une quelconque des revendications 1 à 6.
